# NEUE EUROPÄISCHE PATENTSCHRIFT

(11) **EP 1 419 056 B2**
(45) Veröffentlichungstag und Bekanntmachung des Hinweises auf die Entscheidung über den Einspruch: **26.10.2016**
(45) Hinweis auf die Patenterteilung: 10.12.2008
(21) Anmeldenummer: 02767238.5
(22) Anmeldetag: 20.07.2002
(51) Int. Cl.: B60G 9/00, B60B 35/02

(54) **FAHRZEUGSTARRACHSE MIT INTEGRIERTEN LÄNGSLENKERN**
RIGID AXLE FOR A VEHICLE, COMPRISING INTEGRATED TRAILING ARMS
ESSIEU RIGIDE DE VEHICULE AVEC BRAS OSCILLANTS LONGITUDINAUX INTEGRES

(30) Priorität: 21.08.2001 DE 10140856
(43) Veröffentlichungstag der Anmeldung: 19.05.2004
(73) Patentinhaber: JOST-Werke GmbH, 63263 Neu-Isenburg (DE)
(72) Erfinder: ABRAT, Dunja, 34479 Breuna (DE); SCHÜTTE, Olaf, 34127 Kassel (DE)
(74) Vertreter: RLTG
(86) Internationale Anmeldenummer: PCT/EP2002/008118
(87) Internationale Veröffentlichungsnummer: WO 2003/018334

(56) Entgegenhaltungen:
- FR-A- 2 793 736
- US-A- 4 768 839
- US-A- 5 409 254

## Beschreibung

Die Erfindung betrifft eine Fahrzeugstarrachse aus einem Achskörper, mit an dessen Enden angeordneten Achszapfen o-der Radträgern, und mindestens zwei starr am Achskörper be-festigten Längslenkern gemäß den übereinstimmenden Oberbegriffen der Ansprüche 1 und 9.

Aus der DE 296 16 257 U1 ist eine gattungsgemäße luftgefederte Fahrzeug-starrachse bekannt, die aus einem Achsrohr und daran angeschweißten Längslenkern besteht. Auf das Achsrohr, das an seinen beiden Enden jeweils als Achszapfen ausgebildet ist, sind beidseitig Längslenker mit entsprechenden Aufsteckbohrungen aufgeschoben. Entlang der Aufsteckbohrungen sind die Längslenker mit dem Achsrohr verschweißt. Der Längslenker ist nach hinten über das Achsrohr hinaus verlängert. Sein dortiges freies Ende dient als Auflage einer Luftfeder.

Aus der US 4,057,121 A ist eine gekröpfte NutzfahrzeugHinterachse in Omega-Bauweise bekannt. Von den Rad tragenden Achszapfen führen bei dieser Achse parallele, in Fahrzeuglängsrichtung verlaufende Achsschenkel weg, an denen jeweils ein Antrieb und in denen jeweils ein Getriebe zur Übertragung von Drehmoment vom Antrieb zum jeweiligen Achszapfen vorgesehen sind. Die Achsschenkel sind an ihren von den jeweiligen Achszapfen fernliegenden Längsenden über ein in Fahrzeugquerrichtung verlaufendes Achsbauteil miteinander verbunden. Das verbindende Achsbauteil ist im Bereich der Fahrzeugquermitte mittels eines Kugelgelenks am Fahrzeugrahmen angelenkt. Im Bereich zwischen den Achszapfen ist zwischen die Achsschenkel ein Querträger eingeschraubt, der mit mit seinen endseitigen Verbindungsflanschen jeweils eine Wartungsöffnung der Achsschenkel verdeckt, durch welche hindurch die in den Achsschenkeln aufgenommenen Getriebe zugänglich sind. Der Querträger ist durch einen Panhardstab in Fahrzeugquerrichtung am Fahrzeug festgelegt.

Die US 4,768,839 A offenbart ein Herstellungsverfahren für Achsbaugruppen, gemäß welchem ein Flansch zur Anbringung eines Rades oder einer Bremse mit einem Achszapfen und gemäß welchem der Achszapfen mit einem Achskörper durch Reibschweißen gefügt wird. Diese Druckschrift erwähnt jedoch keinerlei Längslenker.

Die US 5,409,254 A offenbart eine PKW-Starrachse, welche aus mehreren einander überlappenden Blechschalenbauteilen gebildet ist, die durch Schweißen gefügt sind.

U.a. aufgrund der genannten Verlängerung ist der Längslenker ein auf Biegung belastetes Bauteil. Um eine Schwächung des Längslenkers durch die Aufsteckbohrungen zu verringern, muss das Querschnittsprofil des Längslenkers relativ groß ausgelegt werden. Zudem liegen im Bereich der Schweißnähte die Materialschichten des Achsrohres und des Längslenkers radial zum Achskörper übereinander. Derartige Materialdopplungen und Versteifungsmaßnahmen tragen nachteilig zur Höhe der ungefederten Masse bei.

Der vorliegenden Erfindung liegt die Problemstellung zugrunde, eine Fahrzeugstarrachse zu entwikkeln, mit der der Fahrkomfort und die Fahrsicherheit erhöht sowie der Reifenverschleiß vermindert wird. Gleichzeitig soll der Aufbau der Achse eine einfache Anpassung an verschiedene selbstfahrende und/oder geschleppte Fahrzeuge erleichtern.

Diese Problemstellung wird mit den Merkmalen des Hauptanspruches gelöst. Dazu umfasst jede Hälfte der Fahrzeugstarrachse - von der Achsenmitte aus betrachtet - hintereinander angeordnet einen Achskörperabschnitt, einen Längslenkerabschnitt und einen Radkopfabschnitt, wobei der Radkopfabschnitt mindestens aus einem Achszapfen oder einem Radträger besteht. Die Stirnflächen der Achsrohrabschnitte sind mit den benachbarten Stirnflächen der Längslenkerabschnitte und deren gegenüberliegenden Stirnflächen sind mit den jeweils benachbarten Stirnflächen der Radkopfabschnitte zumindest bereichsweise deckungsgleich. Die benachbarten Abschnitte sind jeweils stirnseitig miteinander verschweißt.

Derartige Fahrzeugstarrachsen werden u.a. als Anhängerachsen für schwere Nutzfahrzeuge benutzt. Die Teile Achskörperabschnitt, Längslenkerabschnitt und Radkopfabschnitt werden je nach Spurweite undzulässiger Achslast zusammengestellt und jeweils stirnseitig miteinander reibverschweißt. Beim Zusammenstellen kann z.B. um eine Achse für einen Anhänger zu gestalten, deren Spurbreite größerist als die Standartspurbreite, ein längerer Achskörper verwendet werden. Anstelle des längeren Achskörpers können bei unveränderter Rahmenbreite auch längere Achszapfen oder breitere Längslenkerabschnitte benutzt werden.

Durch das stirnseitige Verschweißen der Abschnitte wird eine Materialdopplung in der Schweißzone vermieden. Zugleich wird das Achsgewicht ohne Festigkeitsverlust reduziert. Außerdem wird die Korrosionsbildung durch das Vermeiden überlappender Fugen und Spalten reduziert und die Schweißnahtprüfung erleichtert.

Die Gewichtsreduktion verringert die ungefederte Achsmasse und mindert somit u.a. die Trampelneigung der Starrachse. Letzteres verbessert die Bodenhaftung und somit die Fahrsicherheit. Auch wirktsich das positiv auf die Standzeit der Reifen aus.

Weitere Einzelheiten der Erfindung ergeben sich aus den Unteransprüchen und der nachfolgenden Beschreibung schematisch dargestellter Ausführungsformen.

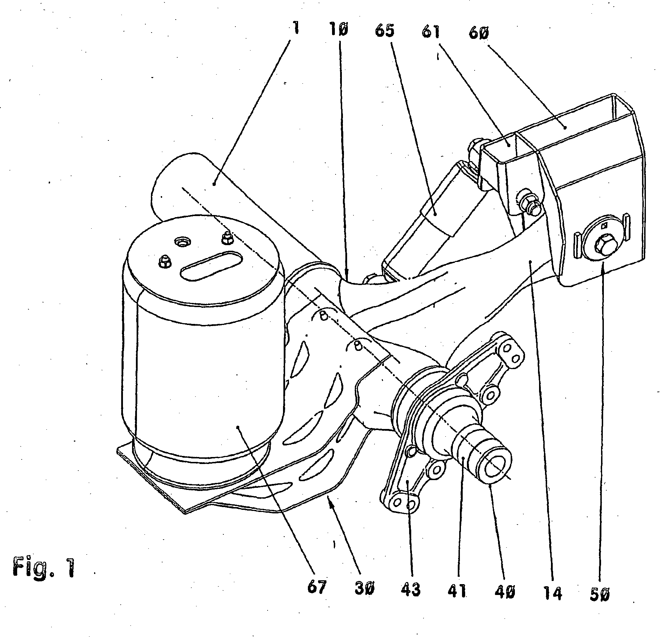

äußerer Teil einer Fahrzeugstarrachse in dimetrischer Darstellung;
Seitenansicht zu Figur 1, jedoch ohne Achszapfen; Draufsicht zu Figur 1 bei horizontal liegendem Längslenker.

Die Figuren 1 bis 3 zeigen beispielhaft einen rechten äußeren Bereich einer geschleppten Nutzfahrzeuganhänger- oder aufliegerachse ohne Rad und Bremse.

Nach Figur 1 umfasst die dargestellte Achsteil einen Achskörperabschnitt (1), einen rechten Längslenkerabschnitt (10) und einen Radkopfabschnitt (40). Der Längslenkerabschnitt (10) ist an seinem vorderen - z.B. in Fahrtrichtung weisenden - Ende mittels eines Elastomerkörpers in einem fahrzeugaufbauseitig gelagerten Lagerbock (60) in einem Gelenklager (50) kardanisch schwenkbar befestigt. Er ist gegenüber dem Lagerbock (60) mittels eines Stoßdämpfers (65) abgestützt. Das hintere Ende des Längslenkerabschnitts (10) stützt sich übereine Luftfeder (67) am nichtdargestellten Fahrzeugaufbau ab.

Der Achskörperabschnitt (1) besteht z.B. aus einem zylindrischen, glatten Achsrohr. Das Achsrohr (1), das auch ein Mehrkantprofils sein kann, endet hier unmittelbar am Längslenkerabschnitt (10) mit einer geraden, ebenen Stirnfläche (2). Die Stirnfläche (2) ist normal zur Mittellinie (3) des Achsrohres (1) ausgerichtet.

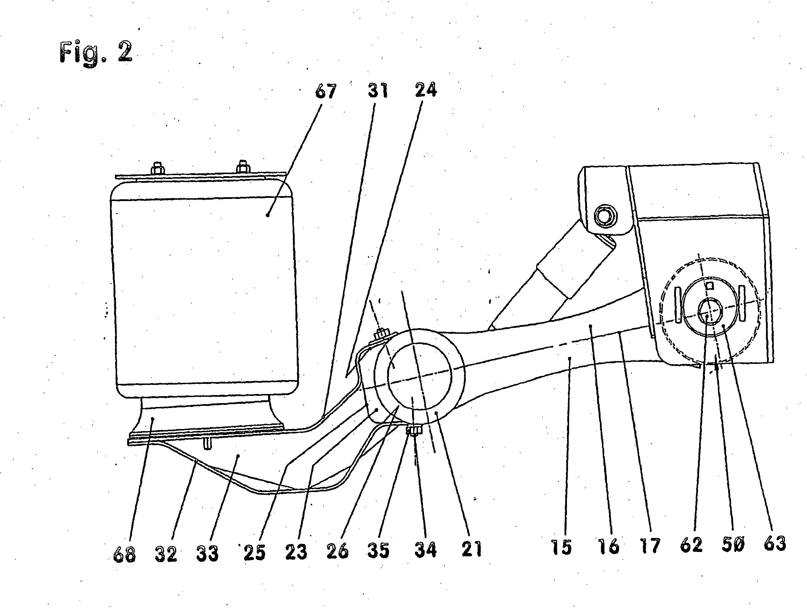

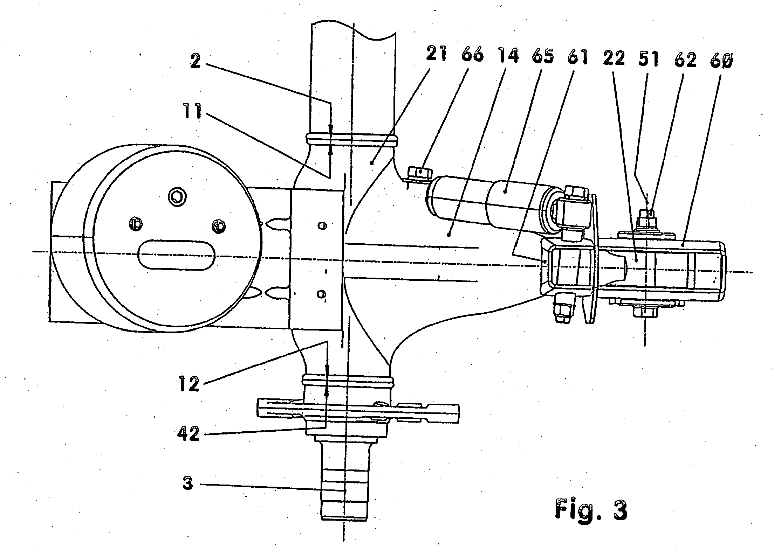

Der Längslenkerabschnitt (10) umfasstfunktional ein Zentralelement (21), ein Lenkersegment (14) mit einem Gelenkauge (22) und eine Federkonsole (30). Das Zentralelement (21) isttonnenförmig ausgebildet und hat zwei z.B. offene Stirnflächen (11, 12), vgl. Figur 3. Zum Gelenkauge (22) hin schließt sich an das Zentralelement (21) das Lenkersegment (14) an. Beide Teile (21, 14) bestehen beispielsweise aus einer aus Stahlblech umgeformten Unter- (15) und Oberschale (16). Beide Schalen (15, 16) sind z.B. spiegelsymmetrisch zueinander ausgeführt und miteinander verschweißt. Die Schweißfuge liegt z.B. in einer Ebene, die durch die Achsrohrmittellinie (3) und die Mittellinie (51) des Gelenklagers (50) aufgespanntwird, vgl. Verbindungslinie (17) aus Figur 2.

Das Lenkersegment (14) hat beispielsweise über seine gesamte Länge hinweg - entlang der Verbindungslinie (17) - einen veränderlichen Querschnitt. Im Bereich des Zentralelements (21) hat es zumindest annähernd einen elliptischen Querschnitt, wobei die große Hauptachse der Ellipse parallel zur Achsrohrmittellinie (3) liegt. Die große Halbachse ist um ca. den Faktor 2,3 größer als die kleine Halbachse. Im Bereich des Gelenkauges (22) ist der Querschnitt oval, wobei die vertikale Höhenausdehnung ca. zwei- bis dreimal größer ist als die horizontale Querausdehnung. Zwischen diesen äußeren Bereichen liegt ca. auf halber Schalenlänge ein mittlerer Bereich, der einen nahezu runden Querschnitt hat.

Der genannte Querschnitt im Bereich des Zentralelements (21) ist z.B. 5,5 mal größer als der Querschnitt im Bereich des Gelenkauges (22). Der im mittleren Bereich liegende nahezu runde Querschnitt ist z.B. 4,6 mal kleiner als der Querschnitt im Bereich des Zentralelements (21).

Das Zentralelement (21) hat auf der dem Lenkersegment(14) abgewandten Seite eine sog. Stütznase (23), vgl. Figur2. Letztere in der Zeichnungsebene nach Figur 2 eine trapezförmige Kontur mit drei Anlageflächen (24-26). Zwei Anlageflächen (24, 26) schließen mit einer gedachten Verbindungslinie (17), die sich zwischen der Achsrohrmittellinie (3) und der Gelenklagermittellinie (51) erstreckt, je einen Winkel von ca. 9 Winkelgraden ein. Die mittlere Anlagefläche (25) ist normal zur Verbindungslinie (17) ausgerichtet. An der Stütznase (23), die im Querschnitt nach Figur 2 beispielsweise auch dreiekkig sein kann, bzw. an deren Anlageflächen (24-26) ist die Federkonsole (30) adaptiert.

Die Federkonsole (30) ist nach Figur 2 als gebogener I-Träger geformt. Der I-Träger umfasst einen oberen großteils auf Zug belasteten, flachen sichelförmig gebogenen Blechgurt (31), einen vergleichbaren, mehr auf Druck belasteten, unteren Blechgurt (32) und mindestens einen zentralen Steg (33), der beide Blechgurte (31,32) zumindest abschnittsweise verbindet. Der obere Blechgurt (31) liegt nahezu vollflächig an der Anlagefläche (24) der Stütznase (23) an. An der mittleren Anlagefläche (25) berührter nurca. das obere Drittel. Der untere Blechgurt (32) befindet sich in großflächigem Kontakt mit der unteren Anlagefläche (26). Beide Blechgurte (31, 32) tragen in ihrer Längsrichtung z.B. zweireihig Versteifungssicken.

Die Krümmung der Federkonsole (30) istso gewählt, dass das obere freie Ende mit einer ebenen Fläche endet, auf der der Rollbalg (67) über einen Abrollkolben (68) aufliegt. Die ebene Fläche schließt mit der Verbindungslinie (17) ca. einen 10°-Winkel ein, vgl. Figur 2.

Die Federkonsole (30) ist mit dem Zentralelement (21) über vier im Übergangsbereich zwischen dem Zentralelement (21) und der Stütznase (23) angeschweißten Gewindebolzen (34) befestigt. Die zur Befestigung notwendigen Muttern (35), vgl. Figur 2 sind in den Figuren 1 und 3 nicht dargestellt. Mit dem Lenkersegment (14) können so auf einfache Weise verschiedenartige Federkonsolen (30) kombiniert werden.

Die Federkonsole (30) kann auch an der Stütznase (23) und/oder dem Zentralelement angeschweißt oder auf andere Weise befestigt sein.

In der Verlängerung der Achsrohrmittellinie (3) ist neben dem Längslenkerabschnitt (10) ein Achszapfen (41) angeordnet. Letzterer ist im wesentlichen ein rotationssymmetrisches Teil zur Lagerung des Rades, das zum Längslenkerabschnitt (10) hin eine zur Mittellinie (3) normale Stirnfläche (42) aufweist. In der Nähe dieser Stirnfläche (42) ist am Achszapfen (41) ein Bremsträgerflansch (43) angeformt.

Das Achsrohr (1), die Längslenkerabschnitte (10) und die Achszapfen (41) sind alle fluchtend zueinander angeordnet. An der inneren Stirnfläche (11) des Längslenkerabschnitts (10) ist das Achsrohr (1) stumpf angeschweißt, während an der äußeren Stirnfläche (12) der Achszapfen (41) stumpf verschweißt ist. Als Schweißverfahren wird z.B. das Reibschweißen benutzt.

Je nach Achsbauart kann auf das zwischen den Längslenkerabschnitten (10) angeordnete Achsrohr (1) weggelassen werden. In diesem Fall werden die inneren Stirnflächen (11) der Zentralelemente (21) direkt miteinander verschweißt. Ggf. wird dazu das Zentralelement zur Achsmitte hin verlängert.

Im Lagerbock (60) ist der Längslenkerabschnitt (10) mittels eines nicht dargestellten Elastomerkörpers gelagert. Letzterer sitzt z.B. eingepresst im Gelenkauge (22). Der Elastomerkörper ist im Lagerbock (60) mit Hilfe eines Schraubbolzens (62) fixiert. Der Schraubbolzen (62) liegt am Lagerbock (60) beidseitig in Exzenterscheiben (63) zwischen seitlichen Anschlägen, z.B. zur Einstellung der Spur, an.

Am Lagerbock (60) befindet sich zur Achse hin ein quaderförmiger Vorbau (61). Zwischen diesem Vorbau (61) und einer im Wurzelbereich des Lenkersegments (14) angeordneten Schraube (66) ist einer der beiden Stoßdämpfer (65) eingebaut.

### Bezugszeichenliste:

- 1: Achskörperabschnitt, Achsrohr
- 2: Stirnfläche
- 3: Mittellinie zu (1)

- 10: Längslenkerabschnitt, Längslenker
- 11: Stirnfläche, innen
- 12: Stirnfläche, außen

- 14: Lenkersegment
- 15, 16: Lenkerunter- und oberschale
- 17: Verbindungslinie

- 21: Zentralelement
- 22: Gelenkauge
- 23: Stütznase
- 24,25,26: Anlageflächen, oben, Mitte, unten

- 30: Federkonsole, Kragarm
- 31, 32: Blechgurt, oben, unten
- 33: Steg
- 34: Gewindebolzen
- 35: Muttern

- 40: Radkopfabschnitt
- 41: Achszapfen
- 42: Stirnfläche
- 43: Bremsträgerflansch

- 50: Gelenklager
- 51: Gelenklagermittellinie
- 60: Lagerbock
- 61: Vorbau
- 62: Schraubbolzen
- 63: Exzenterscheiben

- 65: Stoßdämpfer
- 66: Schraube
- 67: Luftfeder, Rollbalg
- 68: Abrollkolben

## Patentansprüche

1. Fahrzeugstarrachse aus einem Achskörper, mit an dessen Enden angeordneten Achszapfen oder Radträgern, und mindestens zwei starr am Achskörper befestigten Längslenkern, **dadurch gekennzeichnet,**
- **dass** jede Hälfte der Fahrzeugstarrachse - von der Achsenmitte aus betrachtet- hintereinander angeordnet einen Achskörperabschnitt (1), einen Längslenkerabschnitt (10) und einen Radkopfabschnitt (40) umfasst, wobei der Radkopfabschnitt (40) mindestens aus einem Achszapfen (41) oder einem Radträger besteht,
- **dass** jeweils die Stirnflächen (2) der Achsrohrabschnitte (1) mit den ihnen benachbarten inneren Stirnflächen (11) der Längslenkerabschnitte (10) und die äußeren Stirnflächen (12) der Längslenkerabschnitte (10) mit den ihnen jeweils benachbarten Stirnflächen (42) der Radkopfabschnitte (40) zumindest bereichsweise deckungsgleich sind und
- **dass** die Stirnflächen (2) der Achsrohrabschnitte (1) mit den ihnen benachbarten inneren Stirnflächen (11) der Längslenkerabschnitte (10) und die äußeren Stirnflächen (12) der Längslenkerabschnitte (10) mit den ihnen jeweils benachbarten Stirnflächen (42) der Radkopfabschnitte (40) jeweils stirnseitig miteinander unter Vermeidung einer Materialdopplung in der Schweißzone verschweißt sind.

2. Fahrzeugstarrachse nach Anspruch 1, **dadurch gekennzeichne**t, dass die Stirnflächen (2, 11; 12,42) eben sind.

3. Fahrzeugstarrachse nach Anspruch 1, **dadurch gekennzeichnet, dass** die Stirnflächen (2, 11; 12, 42) parallel zur vertikalen Fahrzeugmittenlängsebene ausgerichtet sind.

4. Fahrzeugstarrachse nach Anspruch 1, **dadurch gekennzeichnet, dass** die benachbarten Stirnflächen (2, 11; 12, 42) miteinander reibverschweißt sind.

5. Fahrzeugstarrachse nach Anspruch 1, **dadurch gekennzeichnet, dass** die benachbarten Stirnflächen (2, 11, 12, 42) paarweise flächengleich sind.

6. Fahrzeugstarrachse nach Anspruch 1, **dadurch gekennzeichnet, dass** der einzelne am Fahrzeugaufbau mittels eines Gelenklagers (50) gelagerte Längslenkerabschnitt (10) überdie Mittellinie (3) des Achskörperabschnittes (1) hinaus verlängert ist.

7. Fahrzeugstarrachse nach Anspruch 1, **dadurch gekennzeichnet, dass** die über die Mittellinie (3) des Achskörperabschnittes (1) hinausgehende Verlängerung ein federtragender Kragarm (30) ist.

8. Fahrzeugstarrachse nach Anspruch 1, **dadurch gekennzeichnet, dass** der einzelne Längslenkerabschnitt (10) im mittleren Bereich zwischen dem Gelenklager (50) und der Mittellinie (3) des Achskörperabschnittes (40) ein geschlossenes Rohrprofil mit quadratischer oder kreisrunder Kontur hat.

9. Fahrzeugstarrachse aus einem Achskörper, mit an dessen Enden angeordneten Achszapfen oder Radträgern, und mindestens zwei Längslenkern, **dadurch gekennzeichnet,**
- **dass** jede Hälfte der Fahrzeugstarrachse - von der Achsenmitte aus betrachtet - hintereinander angeordnet einen Längslenkerabschnitt (10) und einen Radkopfabschnitt (40) umfasst, wobei der Längslenkerabschnitt (10) funktional ein Zentralelement (21), ein Lenkersegment (14) mit einem Gelenkauge (22) und eine Federkonsole (30) umfasst, wobei das Zentralelement (21) tonnenförmig ausgebildet ist und zwei offene Stirnflächen (11, 12) aufweist, nämlich eine innere Stirnfläche (11) und eine äußere Stirnfläche (12), wobei der Radkopfabschnitt (40) mindestens aus einem Achszapfen (41) oder einem Radträger besteht,
- **dass** die inneren Stirnflächen (11) der Zentralelemente (21) der benachbarten Längslenkerabschnitte (10) miteinander und die äußeren Stirnflächen (12) der Längslenkerabschnitte (10) mit den ihnen jeweils benachbarten Stirnflächen (42) der Radkopfabschnitte (40) zumindest bereichsweise deckungsgleich sind und
- **dass** die inneren Stirnflächen (11) der Zentralelemente (21) der benachbarten Längslenkerabschnitte (10) unter Vermeidung einer Materialdopplung in der Schweißzone direkt stirnseitig miteinander verschweißt sind und
- **dass** die äußeren Stirnflächen (12) der Längslenkerabschnitte (10) mit den ihnen jeweils benachbarten Stirnflächen (42) der Radkopfabschnitte (40) unter Vermeidung einer Materialdopplung in der Schweißzone stirnseitig miteinander verschweißt sind.

## Claims

1. Vehicle rigid axle comprising an axle beam with axle journals or wheel carriers arranged at the ends thereof and at least two trailing arms rigidly fixed to the axle beam, **characterized**
- **in that** each half of the vehicle rigid axle - viewed from the middle of the axle - comprises an axle beam section (1), a trailing arm section (10) and a wheel head section (40) arranged in tandem, the wheel head section (40) consisting at least of one axle journal (41) or one wheel carrier,
- **in that** in each case the end faces (2) of the axle tube sections (1) are congruent with the adjoining inner end faces (11) of the trailing arm sections (10), at least in some areas, and the outer end faces (12) of the trailing arm section (10) are congruent with the respectively adjoining end faces (42) of the wheel head sections (40), at least in some areas, and
- **in that** the end faces (2) of the axle tube sections (1) with the adjoining inner end faces (11) of the trailing arm sections (10) and the outer end faces (12) of the trailing arm sections (10) with the respective adjoining end faces (42) of the wheel head sections (40) are in each case welded together at their end faces avoiding double material in the welding zone.

2. Vehicle rigid axle according to claim 1 **characterized in that** the end faces (2, 11; 12, 42) are plane.

3. Vehicle rigid axle according to claim 1, **characterized in that** the end faces (2, 11; 12, 42) are aligned parallel to the vertical central longitudinal plane of the vehicle.

4. Vehicle rigid axle according to claim 1, **characterized in that** the adjoining end faces (2, 11; 12, 42) are friction welded to one another.

5. Vehicle rigid axle according to claim 1, **characterized in that** the adjoining end faces (2, 11; 12, 42) form congruent pairs.

6. Vehicle rigid axle according to claim 1, **characterized in that** the individual trailing arm section (10) supported on the vehicle body by means of an articulated bearing (50) is extended beyond the centre line (3) of the axle beam section (1).

7. Vehicle rigid axle according to claim 1, **characterized in that** the extension beyond the centre line (3) of the axle beam section (1) is a spring carrying support arm (30).

8. Vehicle rigid axle according to claim 1, **characterized in that** the individual trailing arm section (10) in the central area between the articulated bearing (50) and the centre line (3) of the axle beam section (40) has a closed tubular profile having a square or circular contour.

9. Vehicle rigid axle comprising an axle beam with axle journals or wheel carriers arranged at the ends thereof, and at least two trailing arms, **characterized**
- **in that** each half of the vehicle rigid axle - viewed from the middle of the axle
- comprises a trailing arm section (10) and a wheel head section (40) arranged in tandem, the trailing arm section (10) functionally comprising a central element (21), a trailing arm segment (14) with an articulated lug (22) and a spring console (30), the central element (21) being adapted barrel-shaped and having two open end faces (11, 12), i.e. an inner end face (11) and an outer end face (12), the wheel head section (40) consisting at least of one axle journal (41) or one wheel carrier,
- **in that** the inner end faces (11) of the central elements (21) of the adjoining trailing arm sections (10) are congruent with one another at least in some areas, and the outer end faces (12) of the trailing arm sections (10) are congruent with the respectively adjoining end faces (42) of the wheel head sections (40) at least in some areas, and
- **in that** the inner end faces (11) of the central elements (21) of the adjoining trailing arm sections (10) are directly welded together at their end faces avoiding double material in the welding zone, and
- **in that** the outer end faces (12) of the trailing arm sections (10) are directly welded together at their end faces with the adjoining end faces (42) of the wheel head sections (40) avoiding double material in the welding zone.

## Revendications

1. Essieu rigide de véhicule composé d'un corps d'essieu, avec une fusée d'essieu disposée au niveau de ses extrémités ou des supports de roue, et au moins deux bras oscillants longitudinaux fixés rigidement sur le corps d'essieu **caractérisé,**
- **en ce que** chaque moitié de l'essieu rigide de véhicule - considérée depuis le milieu de l'essieu - comprend disposées les unes derrière les autres une section de corps d'essieu (1), une section de bras oscillant longitudinal (10) et une section de tête de roue (40), la section de tête de roue (40) se composant d'au moins d'une fusée d'essieu (41) ou d'un support de roue,
- **en ce que** respectivement les faces frontales (2) des sections tubulaires d'essieu (1) coïncident au moins par endroit avec les faces frontales (11) intérieures contiguës des sections de bras oscillant longitudinal (10) et les faces frontales (12) extérieures des sections de bras oscillant longitudinal (10) coïncident au moins par endroit avec les faces frontales (42) respectivement contiguës des sections de tête de roue (40) et
- **en ce que** les faces frontales (2) des sections tubulaires d'essieu (1) sont soudées côté frontal aux faces frontales (11) internes adjacentes des sections de bras oscillant longitudinal (10) et les faces frontales externes (12) des sections de bras oscillant longitudinal (10) sont soudées aux faces frontales (42) adjacentes des sections de tête de roue (40) en évitant un doublement de matière dans la zone de soudage.

2. Essieu rigide de véhicule selon la revendication 1, **caractérise en ce que** les faces frontales (2, 11; 12, 42) sont planes.

3. Essieu rigide de véhicule selon la revendication 1, **caractérise en ce que** les faces frontales (2, 11; 12, 42) sont orientées parallèlement au plan longitudinal médian vertical du véhicule.

4. Essieu rigide de véhicule selon la revendication 1, **caractérisé en ce que** les faces frontales (2, 11; 12, 42) contiguës sont soudées par friction entre elles.

5. Essieu rigide de véhicule selon la revendication 1, **caractérisé en ce que** les faces frontales (2, 11; 12, 42) contiguës sont à surfaces égales par paires.

6. Essieu rigide de véhicule selon la revendication 1, **caractérisé en ce que** la section de bras oscillant longitudinal (10) individuelle logée sur la caisse du véhicule au moyen d'une articulation a rotule (50) est rallongée au-delà de la ligne médiane (3) de la section de corps d'essieu (1).

7. Essieu rigide de véhicule selon la revendication 1, **caractérisé en ce que** la rallonge allant au-delà de la ligne médiane (3) de la section de corps d'essieu (1) est un bras en porte-à-faux (30) portant un ressort.

8. Essieu rigide de véhicule selon la revendication 1, **caractérisé en ce que** la section de bras oscillant longitudinal (10) individuelle présente dans la zone médiane entre l'articulation à rotule (50) et la ligne médiane (3) de la section de corps d'essieu (40), un profile tubulaire fermé au contour carré ou circulaire.

9. Essieu rigide de véhicule composé d'un corps d'essieu, avec des fusées d'essieu ou des supports de roue disposés au niveau de ses extrémités et au moins deux bras oscillants longitudinaux, **caractérisé**
- **en ce que** chaque moitié de l'essieu rigide de véhicule - considérée depuis le milieu de l'essieu - comprend disposées les unes derrière les autres une section de bras oscillant longitudinal (10) et une section de tête de roue (40), la section de bras oscillant longitudinal (10) comprenant fonctionnellement un élément central (21), un segment de bras oscillant (14) avec un oeillet d'articulation (22) et un console de ressort (30), l'élément central (21) étant adapté en forme de tonneau et ayant deux faces frontales ouvertes (11, 12), i.e. une face frontale intérieure (11) et une face frontale extérieure (12), la section de tête de roue (40) se composant au moins d'une fusée d'essieu (41) ou d'un support de roue,
- **en ce que** respectivement les faces frontales (11) intérieures des éléments centraux (21) des sections de bras oscillant longitudinal (10) contiguës coïncident au moins par endroit avec eux-mêmes et les faces frontales (12) extérieures des sections de bras oscillant longitudinal (10) coïncident au moins par endroit avec les faces frontales (42) respectivement contiguës des sections de tête de roue (40) et
- **en ce que** les faces frontales (11) intérieures des éléments centraux (21) des sections de bras oscillant longitudinal (10) contiguës sont directement soudés entre elles côté frontal en évitant un doublement de matière dans la zone de soudage, et
- **en ce que** les faces frontales (12) extérieures des sections de bras oscillant longitudinal (10) sont soudés aux faces frontales (42) contiguës des sections de tête de roue (40) côté frontal en évitant un doublement de matière dans la zone de soudage.
